**Europäisches Patentamt**

**European Patent Office**

**Office européen des brevets**

(19)

(11) Veröffentlichungsnummer: **0 159 963 B1**

(12) **EUROPÄISCHE PATENTSCHRIFT**

(45) Veröffentlichungstag der Patentschrift: **29.01.92**

(51) Int. Cl.⁵: **B01D 39/20**, C04B 38/06, C22B 9/02

(21) Anmeldenummer: **85810145.4**

(22) Anmeldetag: **01.04.85**

(54) **Filter aus Keramik mit offenzelliger Schaumstruktur.**

(30) Priorität: **23.04.84 US 602683**
**26.09.84 US 654391**

(43) Veröffentlichungstag der Anmeldung:
**30.10.85 Patentblatt 85/44**

(45) Bekanntmachung des Hinweises auf die
Patenterteilung:
**29.01.92 Patentblatt 92/05**

(84) Benannte Vertragsstaaten:
**AT BE CH DE FR GB IT LI LU NL SE**

(56) Entgegenhaltungen:
**WO-A-82/03339**
**DE-A- 2 358 703**
**DE-C- 944 725**
**DE-C- 2 613 023**
**US-A- 3 893 917**

(73) Patentinhaber: **ALUSUISSE-LONZA SERVICES AG**
**Feldeggstrasse 4**
**CH-8034 Zürich(CH)**

(72) Erfinder: **Brockmeyer, Jerry W.**
**3032 Laurel Park Hwy.**
**Hendersonville North Carolina 28739(US)**

**Beschreibung**

Die Erfindung betrifft einen Filter aus Keramik mit offenzelliger Schaumstruktur zum Filtrieren von Metallschmelzen, wobei die Keramik im wesentlichen phosphatfrei ist und die einzelnen Kristalle der Keramik untereinander zusammengesintert sind und kein Bindematerial zwischen den Kristallen vorhanden ist und die Filter derart hergestellt werden, dass ein offenzelliger organischer Polymerschaum mit einem wässrigen, thixotrope Eigenschaften aufweisenden Schlicker aus keramischen Werkstoffen imprägniert wird, dass der überschüssige Schlicker entfernt, der beschichtete Polymerschaum getrocknet und erhitzt wird, wobei der organische Polymerschaum zersetzt und verflüchtigt wird, dass der resultierende keramische Schaum bei erhöhter Temperatur gebrannt und dabei gesintert wird, wobei eine Keramik mit offenzelliger Schaumstruktur entsteht. Im weiteren umfasst die Erfindung das Verfahren zur Herstellung derartiger Filter und deren Verwendung.

Aus dem Stande der Technik ist bekannt, poröse keramische Schaummaterialien als Filter für schmelzflüssige Metalle, insbesondere Aluminium zu verwenden, beispielsweise beschrieben in US-A- 3 893 917, 3 947 363, 3 962 081, 4 024 056, 4 024 212, 4 075 303, 4 265 659, 4 342 644 und 4 343 704. Diese Filter werden in erster Linie aus phosphatgebundenen feuerfesten Materialien, unter Zufügung verschiedener anderer Zuschlagstoffe, und durch Brennen bei Temperaturen von ungefähr 1093°C, um die Bindung zu festigen, hergestellt. Ein entsprechendes Verfahren wird in der US-A- 3 962 081 beschrieben. Derartige feuerfeste Materialien sind geeignet für die Verwendung in der Aluminiumindustrie und widerstehen leicht den meisten Aluminium-Legierungen, die üblicherweise bei 704°C vergossen werden, sie sind aber ungeeignet für viele andere potentielle Anwendungen aufgrund der geringen Festigkeit und geringen chemischen Beständigkeit. Es war deshalb Aufgabe vorliegender Erfindung, ein Material zu entwickeln, welches die gewünschten Eigenschaften der bekannten keramischen Materialien hat, insbesondere die hohe Porosität, der niedrige Druckverlust, die grosse geometrische Oberfläche und gewundenen Fliesspfade, welches aber die genannten Nachteile wie mechanische und thermische Festigkeitsmängel und mangelnde chemische Beständigkeit überwindet. Zusätzlich war es wünschenswert, ein spezielles Material zu entwickeln, das relativ einfach hergestellt werden kann und für eine Vielzahl von Anwendungen geeignet ist, wobei speziell auf Anwendungen im Hochtemperaturbereich und für Anwendungen mit Eisenmetallen und insbesondere für Filtrationsanwendungen, abgezielt wurde.

Die erfindungsgemässen Produkte sollen sich demnach vor allem durch hohe Festigkeit und besondere chemische Eigenschaften auszeichnen, d.h. gegenüber bisher bekannten keramischen Schaumstoffen bessere mechanische, thermische und chemische Eigenschaften anbieten.

Erfindungsgemäss sind die Filter gekennzeichnet, dass die Keramik aus einem Schlicker enthaltend zumindest 8 Gew.-% Phosphatbindemittel hergestellt wird und die Keramik offenzelliger Schaumstruktur aus weniger als 2 Gew.-% Phosphat -- ausgedrückt als $P_2O_5$ -- enthaltendem, keramischem Material besteht, dessen einzelnen Kristalle aus keramischem Material untereinander während eines Zeitraumes von 15 min bis 10 h bei zumindest 1600°C fest zusammengesintert sind, um die Porosität zwischen den Kristallen zu minimalisieren, oder dass die Keramik aus einem Schlicker enthaltend 2,4 bis 15 Gew.-%, zweckmässig 3 bis 15 Gew.-%, eines gelierten Aluminiumhydroxid-Binders hergestellt wird und der keramische Schaum bei mindestens 1093°C während mindestens 15 Minuten gesintert wird, so dass die Keramik mit offenzelliger Schaumstruktur aus keramischem Material mit fest gesinterter Bindung besteht.

In einer ersten Ausführungsform können die Filter somit aus einer Keramik bestehen, die aus einem Schlicker, enthaltend zumindest 8 Gew.-% Phosphatbindemittel, hergestellt wurde und die Keramik mit offenzelliger Schaumstruktur aus weniger als 2 Gew.-% Phosphat -- ausgedrückt als $P_2O_5$ -- enthaltendem keramischem Material besteht, dessen einzelnen Kristalle aus keramischem Material untereinander während eines Zeitraums von 15 min bis 10 h bei zumindest 1600°C fest zusammengesintert sind, um die Porosität zwischen den Kristallen zu minimalisieren.

Der Filter ist gekennzeichnet, dass er im wesentlichen phosphatfrei ist und weniger als 2 Gew.-% Phosphat -- ausgedrückt als $P_2O_5$ -- enthält und daß die einzelnen Keramikkörnchen dicht zusammengesintert sind, um die Porosität zwischen den Körnchen so gering wie möglich zu halten und eine Mikroporosität auszubilden. Diese Mikroporosität soll weniger als etwa 5 % betragen.

Die Keramik, aus denen die Filter bestehen können, werden vorzugsweise aus einem Schlicker, enthaltend 8-30 Gew.-%, vorzugsweise 10-25 Gew.-%, Phosphatbindemittel hergestellt.

Ein bevorzugtes Bindemittel ist Aluminiumorthophosphat, es können aber auch andere Bindemittel verwendet werden, wie z.B. Phosphorsäure, Aluminiumphosphat, Alkalimetallphosphate wie Natriumhexametaphosphat, etc. Der Schlicker kann zumindest 8 Gew.-%, bevorzugt mehr als 10 Gew.-% Phosphatbindemittel aufweisen, bezogen auf die Menge der keramischen Werkstoffe in fester Form. Die Mengenangaben basieren auf Aluminiumorthophosphat; werden andere Phosphatbindemittel eingesetzt, muss deren Menge, basierend auf Aluminiumorthophosphat, errechnet werden.

In einer zweiten Ausführungsform können die Filter aus einer Keramik bestehen, die aus einem Schlicker, enthaltend 2,4 bis 15 Gew.-%, zweckmäßig 3 bis 15 Gew.-%, eines gelierten Aluminiumhydroxid-Binders hergestellt wird und der keramische Schaum bei mindestens 1093 ° C während mindestens 15 Minuten gesintert wird, so dass die Keramik mit offenzelliger Schaumstruktur aus keramischem Material mit fest gesinterter Bindung besteht. Ein derartiger Filter ist im wesentlichen binderfrei, d.h. frei von glasigen Phasen, welche die Festigkeit des Produktes verringern. Die Struktur weist demnach eine auch als trockene Sinterung bezeichnete Form der mechanischen Verfestigung auf.

Vorzugsweise wurde die Keramik der Filter aus einem Schlicker, enthaltend 2,4 bis 15 Gew.-%, zweckmässig 3 bis 15 Gew.-%, geliertes Böhmit, hergestellt.

Für die Keramik der Filter wird als keramischer Werkstoff vorzugsweise Tonerde oder Aluminiumoxid eingesetzt.

Die Mengenangabe bezüglich der Binder beziehen sich immer auf die ganze Menge trockenen Materials der keramischen Zusammensetzung, d.h. ohne Berücksichtigung des Anmachwassers des Schlickers.

Das Verfahren zur Herstellung der Filter wird derart ausgeführt, dass ein netzartig ausgebildeter, offenzelliger organischer Polymerschaum mit wässerigem, thixotrope Eigenschaften aufweisenden Schlicker, enthaltend die keramischen Materialien und Bindemittel, imprägniert wird, dass dann der überflüssige Schlicker entfernt sowie der beschichtete Polymerschaum getrocknet und erhitzt wird, wobei der organische Polymerschaum sich zersetzt und verflüchtigt, dass der resultierende keramische Schaum bei erhöhter Temperatur gebrannt wird, wobei ein keramischer Schaum entsteht, dessen Netzwerk aus keramischem Material besteht, und dass der Filter eine offenzellige Struktur aus einer Vielzahl untereinander verbundener, von einem Netzwerk aus Keramik umgebenen Hohlräumen aufweist.

In Uebereinstimmung mit dem Verfahren vorliegender Erfindung wird ein hydrophober, offenzelliger organischer Polymerschaum, vorzugsweise ein Polyurethanschaum angewendet.

Als Bindemittel enthält der Schlicker in der ersten Ausführungsform der Erfindung zumindest 8 Gew.-% Phosphatbindemittel und es wird derart gesintert, dass eine Keramik mit offenzelliger Schaumstruktur aus weniger als 2 Gew.-% Phosphat -- aus gedrückt als $P_2O_5$ -- enthaltendem Material entsteht, deren einzelne Kristalle aus keramischem Material zusammengesintert werden, um die Porosität zwischen den Kristallen zu minimalisieren, oder, in der zweiten Ausführungsform der Erfindung, 2,4 bis 15 Gew.-%, zweckmässig 3 bis 15 Gew.-%, eines gelierten Aluminiumhydroxid-Binders und der keramische Schaum wird bei erhöhten Temperaturen derart gesintert, dass eine Keramik mit offenzelliger Schaumstruktur aus keramischem Material mit fest gesinterter Bindung entsteht.

Als Bindemittel enthält der Schlicker in der ersten Ausführungsform der Erfindung zumindest 8 Gew.-%, in der Regel 8 bis 30 Gew.-%, zweckmässig zumindest 10 Gew.-% und vorzugsweise 10 bis 25 Gew.-% Phosphatbindemittel.

Der Schlicker der zweiten Ausführungsform der Erfindung enthält 2,4 bis 15 Gew.-%, zweckmässig 3 bis 15 Gew.-% eines gelierten Alumininumhydroxid-Binders und der keramisch Schaum kann bei erhöhten Temperaturen gesintert werden, dass eine Keramik mit offenzelliger Schaumstruktur aus keramischem Material mit fest gesinterter Bindung entsteht.

Nach dem Verfahren der Erfindung gemäß ersten Ausführungsform der Erfindung kann ein hydrophober, netzartiger, organischer Polymerschaum, vorzugsweise Polyurethanschaum, mit einem wässerigen und thixotrope Eigenschaften aufweisenden Schlicker aus keramischen Materialien und mindestens 8 Gew.-%, bevorzugt mehr als 10 Gew.-% Phosphatbindemittel imprägniert, getrocknet und erhitzt, um den organischen Polymerschaum zu entfernen, und während eines Zeitraumes von 15 min bis 10 h bei zumindest 1660 ° C zur Verflüchtigung des Phosphats gebrannt werden, wobei ein weniger als 2 Gew.-% Phosphat -- ausgedrückt als $P_2O_5$ -- enthaltendes Material entsteht, wonach das feuerfeste Material gesintert wird, um einen Werkstoff herzustellen, dessen einzelne Keramikkörnchen so dicht verschmolzen sind, dass die Porosität zwischen den Körnchen so gering wie möglich gehalten wird.

Gemäss der Erfindung wird die Keramik mit offenzelliger Schaumstruktur ausgehend von einem offenzelligen, vorzugsweise hydrophoben, flexiblen organischen Schaumstoff hergestellt. Geeignete Werkstoffe sind Polymerschäume, wie z.B. Polymerurethan-Schäume und Zellulosederivat-Schäume. Normalerweise eignet sich jeder brennbare und verformbare organische Schaum, der elastisch ist und nach einer Verformung seine ursprüngliche Form wiedergewinnen kann. Der Schaum kann zwischen 2 bis 40, vorzugsweise zwischen 20 und 30 Poren je linearen cm Länge aufweisen. Der Schaum muss bei einer Temperatur ausbrennen oder sich verflüchtigen, die unter der Brenntemperatur des verwendeten keramischen Materials liegt.

Der verwendete wässerige, keramische Schlicker ist thixotrop und soll ein gutes Fliessverhalten aufweisen, sowie die im keramischen Schaum zur Verwendung vorgesehenen keramischen Materialien suspendiert im Wasser, dessen Anteil nicht kritisch ist und 10-50 Gew.-% betragen soll, enthalten. Typische keramische Werkstoffe, die verwendet werden können, beinhalten Aluminiumoxid, Tonerde, Zirkondioxid, Zirkonsand, Mullit und Siliziumkarbid oder Mischungen davon. Die Korngrösse soll entsprechend 75 mesh und feiner und bevorzugt 270 bis 400 mesh und feiner betragen. Tonerde wird zwar als feuerfestes Material bevorzugt, jedoch kann jedes feuerfeste Material verwendet werden, das sich für den Gebrauch mit einem Phosphatbindemittel eignet und eine Sintertemperatur aufweist, die höher liegt als die zum Austreiben des Phosphors benötigte Temperatur.

Ein Stück flexiblen organischen Schaumstoffs wird derart mit wässerigem keramischem Schlicker imprägniert, dass dessen Netzwerk damit überzogen und die Hohlräume damit gefüllt werden. Ueblicherweise wird der Schaum einfach für eine kurze Zeitdauer, die ausreicht, um eine vollständige Imprägnierung des Schaumes sicherzustellen, in den Schlicker eingetaucht und gegebenenfalls zusammengedrückt und ausdehnen gelassen.

Der imprägnierte Schaum wird dann ausgepresst, um soviel vom Schlicker zu entfernen, dass das Netzwerk des organischen Schaumes mit Schlicker überzogen bleibt und gleichmässig, sowie ohne Anhäufung, durch das ganze Schaumstoffstück hindurch verteilt, eine Anzahl von Poren durch den Schlicker geschlossen bleiben. Damit werden stark gewundene Durchflusskanäle im Endprodukt erreicht. So kann beispielsweise bei einem kontinuierlichen Verfahren der imprägnierte Schaum durch eine oder mehrere voreingestellte Walzenpaare geführt werden, um die gewünschte Menge des Schlickers aus dem Schaumstück auszupressen und den gewünschten Imprägnierungsgrad zu erhalten. Natürlich kann das Abpressen auch manuell erfolgen, indem man den flexiblen Schaumstoff bis zum gewünschten Mass ausdrückt. In dieser Phase ist der Schaum immer noch flexibel und kann -- falls erwünscht -- in für spezifische Filtrationsaufgaben geeignete Strukturen geformt werden, d.h. gekrümmte Platten, Hohlzylinder, etc. Es ist dann notwendig, den geformten Schaum auf übliche Weise in der gegebenen Form festzuhalten bis das organische Substrat zerfallen ist, oder bevorzugt bis der Keramikstoff gesintert ist. Der imprägnierte Schaum wird dann durch an sich bekannte Massnahmen getrocknet, beispielsweise auf dem Wege des Lufttrocknens, des Schnelltrocknens bei einer Temperatur von 100-700 °C während eines Zeitraumes von 15 min bis 6 h oder durch Mikrowellentrocknen. Das Lufttrocknen erfordert ca. 8 bis 24 h. Nach dem Trocknen wird das behandelte Schaumstück gebrannt und bis zum Sintern des keramischen Ueberzuges erhitzt.

Das Brennen erfolgt bei der ersten Ausführungsform der Erfindung bei einer Temperatur von mindestens 1660 °C, bevorzugt bei mindestens 1676 °C, und diese Temperatur wird 15 min bis 10 h gehalten, um das Netzwerk des flexiblen organischen Schaumes zu zersetzen und auszutreiben, dann den Phosphatanteil auszutreiben und schliesslich den keramischen Werkstoff zu sintern.

Das entstehende Produkt ist eine poröse, gesinterte Keramik in Schaumstruktur, die im wesentlichen phosphatfrei ist, d.h. weniger als 2 Gew.-% Phosphat -- ausgedrückt als $P_2O_5$ -- aufweist, und durch bessere mechanische, thermische und chemische Eigenschaften gekennzeichnet ist als die der bisher bekannten, keramischen Schaumstoffe. Die Keramik in offenzelliger Schaumstruktur ist gekennzeichnet durch eine Vielzahl untereinander verbundener Hohlräume, die von einem Netzwerk aus Keramik umgeben sind. Im Netzwerk der Keramik sind die einzelnen Keramikkörnchen dicht gesintert, um die Porosität zwischen den Körnchen so gering wie möglich zu halten und eine Mikroporosität zu erzielen, die weniger als etwa 5% betragen soll. Vorteilhaft weist die Keramik in offenzelliger Schaumstruktur eine Anzahl regelmässig durch die Struktur verteilter verschlossener Poren auf, was die Gewundenheit der Fliesswege erhöht.

Das genannte erfindungsgemässe Verfahren führt dazu, dass die ganze Struktur bis zu 15 % pro Längendehnung schwindet und es ergeben sich Keramikkörper, die, ausgehend von Polymerschäumen mit 2 bis 40 Poren je cm Länge, 2 bis 46 Poren je cm Länge aufweisen und es erfolgt eine Herabsetzung der Makroporosität oder Grobporosität des gesamten Filterkörpers. Bei einem nach dem erfindungsgemässen Verfahren hergestellten Filter beträgt die Makroporosität etwa 85 %, ohne die erfindungsgemässen Verfahrensschritte hingegen 90 %.

Weiters kann das Verfahren nach vorliegender Erfindung derart ausgeführt werden, dass im wesentlichen statt des Phosphatbindemittels ein gelierter Aluminiumhydroxid-Binder angewendet wird.

Das erfindungsgemässe Verfahren wird an sich wie obengenannt ausgeführt, die sich ergebenden Aenderungen sind aus den nachfolgenden Erläuterungen ersichtlich.

In Uebereinstimmung mit vorliegender Erfindung wird die Keramik mit offenzelliger Schaumstruktur aus einem offenzelligen, vorzugsweise hydrophoben, flexiblen Schaummaterial hergestellt, das eine Vielzahl von miteinander verbundenen Hohlräumen, umgeben von einem Netz dieses flexiblen Schaummaterials, aufweist. Typisches Material, das verwendet werden kann, umfasst polymere Schäume, wie Polyurethanschaum und cellulosische Schäume. Generell kann jeder brennbare organische Plastikschaum verwendet werden, der die Rückformkraft und Fähigkeit hat, sich in seine ursprüngliche Form zurückzubilden. Der Schaum muss ausbrennen oder verdampfen bei Temperaturen, die unter der Brenntemperatur des verwendeten keramischen Materials liegt.

Der wässrige keramische Schlicker, der angewendet wird, soll ein strukturviskoses Verhalten aufweisen und thixotrop sein, einen relativ hohen Grad an Fliessfähigkeit haben und aus einer wässrigen Suspension der Keramik im vorgesehenen Material bestehen. Typische keramische Materialien, die verwendet werden können, umfassen vorzugsweise Aluminiumoxid und Tonerde und ebenso andere, wie Zirkonoxid, Zirkonsand, Chromoxid, Cordierit, Mullit, etc., jeweils in einer Korngrösse entsprechend 75 mesh und feiner und vorzugsweise von 270 bis 400 mesh und feiner.

Die Anwendung eines Phosphates oder eines anderen anorganischen Binders ist nach dieser Verfahrensführung nicht notwendig.

Der wässrige Schlicker enthält ein geliertes Aluminiumhydroxid (Aluminiumoxidhydrat).

In Uebereinstimmung mit dieser Verfahrensführung werden Aluminiumhydroxide, vorzugsweise Böhmit, aber auch die weiteren Aluminiumoxid-Monohydrate (Aluminiumoxidhydroxide) und Aluminiumoxid-Trihydrate (Aluminiumhydroxid), als temporäre Binder und rheologisches Mittel angewendet. Zuerst wird eine kollidale Dispersion mit einer Säure, die im wesentlichen unter Brenntemperatur flüchtig ist, vorzugsweise Salpetersäure, aber auch Salzsäure, Schwefelsäure oder andere, hergestellt. Auf diesen Verfahrensschritt folgt die Herstellung eines strukturviskosen und thixotropen Schlickers aus dem gewünschten keramischen Material, vorzugsweise Aluminiumoxid.

Allgemein wendet man bei der zweiten Ausführungsform der Erfindung 2,4 bis 15 Gew.-%, zweckmässig 3-15 Gew.-%, Aluminiumhydroxid, bezogen auf die trockenen Materialien und ein Hydrat:Säure-Verhältnis von 2:1 bis 5:1, vorzugsweise 3:1, basierend auf 70 % Säure, an. In der nachfolgenden Herstellung des thixotropen Schlickers kann man, falls gewünscht, kleine Mengen von organischen Zusätzen, zum Beispiel rheologische Zusätze, zusätzliche Binder, Dispergiermittel und ähnliches zufügen. Der Wassergehalt ist nicht speziell kritisch, beispielsweise können 10-50 Gew.-% Wasser, bezogen auf das Gesamtgewicht des Schlickers, verwendet werden. Die Wasserkomponente erzeugt auf einfache Weise die gewünschte Fluidität, um den Polymerschaum zu imprägnieren und das organische Netzwerk zu beschichten.

Ein Vorteil dieser Verfahrensführung und der resultierenden Produkte ist, dass keine Rückstände wie Phosphate, die potentiell reaktiv mit geschmolzenen Metall sind, im Endprodukt zurückbleiben.

So, in Uebereinstimmung mit der Ausführung des Verfahrens vorliegender Erfindung, wird man zuerst das Aluminiumhydroxid mit der Säure gelieren und gibt dann die keramischen Komponenten und das Wasser zu, um den Schlicker zu bilden. Falls gewünscht, können alle Komponenten zusammen gemischt werden. Der Schlicker wird dann für die Herstellung der Keramik mit offenzelliger Schaumstruktur verwendet.

Das flexible Schaummaterial wird mit dem wässrigen keramischen Schlicker derartig imprägniert, dass das netzartige Gerüst damit beschichtet wird, und dass die Hohlräume damit gefüllt werden. Normalerweise wird dem Verfahren der Vorzug gegeben, den Polymerschaum einfach für kurze Zeit in den Schlicker einzutauchen, um eine vollständige Imprägnierung des Schaumes zu erreichen.

Der imprägnierte Schaum wird dann zusammengedrückt, um einen Teil des Schlickers derart auszupressen, dass der verbleibende Teil des Schlickers das netzartige Gerüst bedeckt und auch eine Vielzahl gleichmässig im Körper verteilter, blockierter Poren bildet, die eine Gewundenheit der Fliesswege erzeugen, wobei die blockierten Poren gleichmässig verteilt und nicht angehäuft im keramischen Körper vorliegen sollen. Im nachfolgenden Verfahren kann man den imprägnierten Schaum durch voreingestellte Rollen führen, um das gewünschte Mass des Abpressens des Schlickers aus dem Schaum zu erreichen und das gewünschte Mass an Imprägnierung zu erzielen. Natürlich kann dies auch von Hand geschehen, durch einfaches manuelles Ausquetschen des flexiblen Schaummaterials bis zum gewünschten Mass. In diesem Stadium ist der Schaum immer noch flexibel und kann, falls gewünscht, in verschiedene Formen, geeignet für spezifische Filterzwecke geformt werden, z.B. in gebogene Platten, hohle Zylinder etc. Es ist dann notwendig, den geformten Schaum durch bekannte Massnahmen in Form zu halten, bis das organische Gerüst zersetzt ist oder vorzugsweise bis die Keramik gesintert ist. Der imprägnierte Schaum wird dann auf geeignete Weise getrocknet, wie Lufttrocknen, beschleunigtes Trocknen bei Temperaturen von 100-700 °C für Zeiten von 15 min bis 6 h oder durch Mikrowellentrocknen. Das Lufttrocknen benötigt 8-24 h. Nach dem Trocknen wird das Material auf erhöhte Temperaturen gebracht, um die keramische Beschichtung auf dem netzartigen Gerüst zu sintern und eine Vielzahl von gleichmässig verteilten blockierten Poren zu hinterlassen, wie oben beschrieben.

In Uebereinstimmung mit vorliegender Erfindung führt das Trocknungsverfahren bei der Anwendung eines Aluminiumhydroxides zuerst zu Kristalliten des Aluminiumoxids, anfänglich zu Gamma-Aluminiumoxid und schliesslich umgewandelt zu Alpha-Aluminiumoxid. Das ergibt eine genügende Grünfestigkeit zum Verarbeiten und Brennen.

Die jeweiligen Brennbedingungen hängen vom keramischen Material ab. Es werden bei der zweiten Ausführungsform der Erfindung Temperaturen von über 1093°C und vorzugsweise von über 1371°C für mindestens 15 min und gewöhnlich mindestens 1 h und gewöhnlich weniger als 10 h angewendet, um das Gerüst des flexiblen Schaumes auszutreiben und die Keramik zu sintern, um eine feste gesinterte keramische Bindung auszubilden.

Das resultierende Produkt ist ein poröses, fest gesintertes keramisches Schaummaterial, das im wesentlichen von Phosphat und organischen Komponenten frei ist, und gekennzeichnet ist, durch mechanische, thermische und chemische Eigenschaften, die bekannten keramischen Schaummaterialien überlegen sind. Der keramische Schaum ist gekennzeichnet durch eine offene Zellstruktur mit einer Vielzahl von untereinander verbundener Hohlräume, umgeben von einem Gerüst aus Keramik, welche trocken gesintert und absolut frei ist von potentiell gefährlichen Bindermaterialien oder Glas- oder Tonphasen. Die Keramik in Form einer offenzelligen Schaumstruktur ist ein festes gesintertes Produkt, besonders geeignet für Hochtemperaturanwendungen, wie Eisen-, Eisenlegierungs- und Stahlfiltration.

Die vorgenannte Struktur weist eine Erhöhung der gewünschten physikalischen Eigenschaften auf, wie erhöhte mechanische, thermische und chemische Eigenschaften. Irgendwelche kleinen Anteile an organischen Zusätzen werden beim Brennprozess ausgetrieben. Die kleine Menge an Zusätzen, die, falls gewünscht, angewendet werden können, würden die Eigenschaften nicht verschlechtern, z.B.weniger als jeweils 1-3 Gew.-% Sinterhilfsmittel, wie Zinkoxid, Kornwachstumsinhibitoren, wie Magnesiumoxid oder anorganische rheologische Hilfsmittel, wie Tone, Montmorillonit, Bentonit, Kaolin oder organische rheologische Hilfsmittel.

Verschiedene Verfahren zum Herstellen von keramischen Schäumen für Filter für Metallschmelzen werden auch in US-PS 3 962 081, US-PS 4 075 303 und US-PS 4 024 212 beschrieben, deren Lehre sinngemäss für vorliegende Erfindung ebenfalls angewendet werden kann.

Die erfindungsgemässen Filter sind aufgrund ihrer besonderen mechanischen, thermischen und chemischen Eigenschaften geeignet, zur Filtration von Metallschmelzen, wie Eisen-, Eisenlegierungen und Stahlschmelzen.

BEISPIEL 1

Verfahrensführung mit Phosphatbinder:

Verschiedene Proben wurden durch Imprägnierung eines handelsüblichen, hydrophoben, offenzelligen Polyurethanschaumstoffes mit keramischem Schlicker präpariert, der als Feststoff 98 Gew.-% Tonerde und 2 Gew.-% Montmorillonit als rheologische Hilfe enthält. Hinzugefügt wurden etwa 30 Gew.-% Aluminiumorthophosphat in einer 50 Gew.-% wässerigen Lösung, ausgehend vom Gesamtgewicht. Die Proben wurden getrocknet und bei Temperaturen von 1093°C, 1577°C, 1635°C, 1660°C, 1676°C und 1699°C während eines Zeitraumes von 5 h gebrannt. Die Proben wurden danach einer chemischen Analyse und Prüfung bezüglich der Druckfestigkeit und chemischen Beständigkeit unterzogen. Die Ergebnisse werden nachstehend erläutert.

Die Ergebnisse zeigen deutlich, dass bei etwa 1093°C gebrannte Proben im wesentlichen über 2 Gew.-% Phosphat -- ausgedrückt als $P_2O_5$ -- enthielten, aber bei 1660°C und höher gebrannte Proben im wesentlichen phosphatfrei waren, d.h. weniger als 2 Gew.-% Phosphat -- ausgedrückt als $P_2O_5$ -- enthielten. Ferner waren in allen Fällen die bei 1660°C und höher gebrannten Proben dadurch gekennzeichnet, dass die einzelnen Keramikkörnchen dicht verschmolzen waren und sich die Porosität zwischen den Körnchen als minimal erwies, wobei die Mikroporosität weniger als 5 % betrug.

Die nachstehenden Tabellen I und II zeigen die verschiedenen Eigenschaften bei den verschiedenen Brenntemperaturen, wobei die Dicke des Ausgangsmaterials einheitlich jeweils 5,10 cm (2,01 inch) betrug.

TABELLE I

Druckfestigkeit, Rohdichte und Dicke der bei verschiedenen Temperaturen gebrannten keramischen Schäume

| Brennen °C | 1093 | 1577 | 1635 | 1660 | 1676 | 1699 |
|---|---|---|---|---|---|---|
| Zahl der geprüften Proben | 8 | 10 | 9 | 11 | 10 | 10 |
| Druckfestigkeit | | | | | | |
| kg/cm$^2$ | 10.28 | 11.01 | 9.70 | 10.12 | 14.30 | 18.52 |
| psi* | 146 | 157 | 138 | 144 | 203 | 263 |
| Scheinbare Rohdichte | | | | | | |
| gm/cm$^3$ | 0.31 | 0.36 | 0.33 | 0.37 | 0.37 | 0.39 |
| lb/ft$^3$** | 19.2 | 22.3 | 20.4 | 22.9 | 22.9 | 24.1 |
| Dicke | | | | | | |
| cm | 5.10 | 4.87 | 4.82 | 4.64 | 4.41 | 4.48 |
| in.*** | 2.01 | 1.92 | 1.90 | 1.83 | 1.74 | 1.77 |

\*    psi = pound per square inch (Pfund pro 6.45 cm$^2$)

\*\*   lb  = pound (Pfund); ft = foot = 30,5 cm

\*\*\* in. = Inch = 2,54 cm

Die oben in Tabelle I aufgeführten Festigkeitsdaten zeigen eine starke Zunahme bei Temperaturen über 1676°C, wogegen annehmbare Festigkeit bei 1660°C erreicht wird. Die Daten zeigen ferner, dass die scheinbare Dichte zunimmt und die Dicke abnimmt, was auf eine Schrumpfung hinweist, welche durch den Verlust der Porosität in den Wänden, d.h. durch die sich bildende Mikroporosität, verursacht ist.

TABELLE II

Chemische Beständigkeit der bei verschiedenen Temperaturen
gebrannten keramischen Schäume

Brenntemperatur   Gewichtverlust (%) in:

| °F | °C | 10%NaOH | 10%HNO$_3$ | 10%H$_2$SO$_4$ | 10%HCL | 10%CH$_3$COOH |
|---|---|---|---|---|---|---|
| 2000 | 1093 | Proben zerfielen in den Lösungen | | | | |
| 2870 | 1577 | 13.4 | 12.5 | 12.6 | 10.5 | 1.5 |
| 2980 | 1635 | 10.4 | 10.5 | 10.6 | 10.6 | 1.4 |
| 3020 | 1660 | 8.8 | 10.1 | 8.1 | 9.2 | 1.6 |
| 3050 | 1676 | 3.6 | 4.9 | 4.4 | 5.5 | 1.1 |
| 3090 | 1699 | 2.7 | 2.0 | 2.2 | 1.4 | 0.9 |

Die chemische Beständigkeit der Proben wurde bestimmt, indem man die vorher gewogenen Filterproben in die spezifischen Lösungen 5 1/2 Tage lang eintauchte. Die Proben wurden dann aus den Lösungen entfernt, ausgewaschen, getrocknet und wieder gewogen. Die bei 1093°C gebrannten Proben zerfielen oder weichten soweit auf, dass sie nicht unversehrt aus den Lösungen entnommen werden konnten; daher wurden keine Gewichtsverlustdaten registriert. Für die anderen Proben sind die Gewichtsverluste oben aufgeführt. Bei 1660°C, und noch mehr bei 1676°C, scheint eine starke Aenderung einzutreten.

Auf diese Weise erhält man, wie aus dem Vorstehenden ersichtlich wird, einen keramischen Schaumstoff mit verbesserten Festigkeitseigenschaften und chemischer Haltbarkeit.

BEISPIEL 2

Verfahrensführung mit Aluminiumhydroxidbinder:

Ein thixotroper keramischer Schlicker wurde derart hergestellt, dass zuerst ein Gel bestehend aus:

| | |
|---|---|
| 1853 g | Böhmit |
| 476 ml | konzentrierter Salpetersäure |
| 9060 ml | Wasser |

hergestellt wurde. Dieses Gel wurde zu einer trockenen Pulvermischung aus:

| | |
|---|---|
| 74 kg | Aluminiumoxid |
| 79 g | Magnesiumoxid |

gegeben. Weitere 300 ml Wasser wurden zu der Mischung zugegeben und der ganze Ansatz wurde in einem Hochgeschwindigkeitsmischer vollständig gemischt.

Der obengenannte thixotrope keramische Schlicker wurde zum imprägnieren eines offenzelligen, flexiblen Polyurethanschaumblocks mit nominell 8 Poren je cm gebraucht, zu einer Gründichte von ungefähr 10 Gew.-% der theoretischen Dichte, so dass das faserartige Gerüst des Schaumes damit bedeckt und die Hohlräume damit gefüllt sind. Die Imprägnation wurde ausgeführt durch Eintauchen des Schaumes in den Schlicker und der Verwendung von voreingestellten Rollen, um den Schaum zusammenzudrücken und ein Teil des Schlickers auszutreiben, wobei der netzartige Gerüstteil mit Schlicker bedeckt bleibt, sich eine Vielzahl von blockierten Poren durch den Körper gleichmässig verteilt, ausbildet, welche die Gewundenheit der Fliesswege erhöhen.

Die resultierenden imprägnierten Schäume werden getrocknet und erhitzt, um die organischen Komponente zu entfernen und gebrannt, um eine feste gesinterte keramische Bindung durch aufheizen auf ungefähr 1648°C während 1 h, zu erreichen. Das resultierende Produkt ist ein poröses, gesintertes, keramisches Schaummaterial, im wesentlichen frei von organischen Komponenten und gekennzeichnet durch ausgezeichnete mechanische, thermische und chemische Eigenschaften. Die lineare Schrumpfung durch das Brennen betrug ungefähr 15 %, was bedeutet, dass der resultierende keramische Schaum, gebrannt, eine nominelle Porenzahl von 9 Poren per laufenden cm und, gebrannt, eine Dichte von 15 % der theoretischen Dichte aufweist.

BEISPIEL 3

Keramische Schäume, hergestellt nach Beispiel 2, mit einer Grösse von 5x5x2,5 cm nach dem Brennen, werden bei einem Präzisionsformgussverfahren zum Filtrieren von rostfreiem Stahl hoher Qualität eingesetzt. Die keramischen Filter werden direkt in der Gussöffnung plaziert und von unten angegossen. Die resultierenden Gussstücke sind frei von Defekten, verursacht durch ein Einschlüsse.

BEISPIEL 4

Keramische Schäume, hergestellt nach Beispiel 2, mit Abmessungen nach dem Brennen von 10x10x2,5 cm, werden zum filtrieren von Ventilatorgehäusen aus rostfreiem Stahl angewendet, dafür wird eine Einrichtung zum Eingiessen von oben angewendet. Es wurde ein Hochqualitätsguss erreicht. Eine Schweissreparatur, normalerweise notwendig für solchen Guss und verursacht durch Einschlüsse, wurde damit verhindert.

BEISPIEL 5

Keramische Schäume, hergestellt nach Beispiel 2, mit Abmessungen nach dem Brennen von 10x10x2,5 cm, werden als Filter für eine Hochtemperatur-Nickel-Aluminium-Bronze-Legierung Testguss verwendet. Ein Hochqualitätsguss wurde erreicht. Dieses Gussverfahren würde normalerweise mehrere Stunden Schweissreparatur verlangen, im vorliegenden Fall resultierte ein Guss mit erheblich reduziertem Bedarf an Schweissarbeiten.

BEISPIEL 6

Ein thixotroper Schlicker wurde nach Beispiel 2 hergestellt und für die Imprägnation eines nominal 4 Poren per laufenden cm, offenzelligen, flexiblen Polyurethanschaumblockes verwendet, wie nach Beispiel 1. Der resultierende imprägnierte Schaum wurde mit Mikrowellen getrocknet und dann bei 1648°C gebrannt, um eine feste gesinterte keramische Bindung und ein poröses verschmolzenes keramisches Schaummaterial, im wesentlichen frei von organischen Komponenten, gekennzeichnet durch ausgezeichnete mechanische, thermische und chemische Eigenschaften, herzustellen. Der gebrannte keramische Schaum, mit den Abmessungen 10x10x2,5 cm und mit einer Porenzahl von 4,7 Poren je cm, wurde zum Filtrieren von niederlegiertem Stahl verwendet. Defekte aus Einschlüssen stammend, wurden eliminiert.

Somit, wie aus den vorhergehenden Angaben ersichtlich, wird ein keramischer Schaum mit besten Festigkeitseigenschaften und chemischer Beständigkeit erhalten.

**Patentansprüche**

**1.** Filter aus Keramik mit offenzelliger Schaumstruktur zum Filtrieren von Metallschmelzen, wobei die Keramik im wesentlichen phosphatfrei ist und die einzelnen Kristalle der Keramik untereinander dicht gesintert sind und kein Bindematerial zwischen den Kristallen vorhanden ist und die Filter derart hergestellt werden, dass ein offenzelliger organischer Polymerschaum mit einem wässerigen, thixotrope Eigenschaften aufweisenden Schlicker aus keramischen Werkstoffen imprägniert wird, dass der überschüssige Schlicker entfernt, der beschichtete Polymerschaum getrocknet und erhitzt wird, wobei der organische Polymerschaum zersetzt und verflüchtigt wird, dass der resultierende keramische Schaum bei erhöhter Temperatur gebrannt und dabei gesintert wird, wobei eine Keramik mit offenzelliger Schaumstruktur entsteht,

dadurch gekennzeichnet,

dass die Keramik aus einem Schlicker, enthaltend zumindest 8 Gew.-%, wobei die Menge auf Aluminiumorthophosphat basiert, Phosphatbindemittel hergestellt wird, wobei die Menge des Binders sich auf die Menge des trockenen Materials der keramischen Zusammensetzung bezieht, und die Keramik mit offenzelliger Schaumstruktur aus weniger als 2 Gew.-% Phosphat -- ausgedrückt als $P_2O_5$ -- enthaltendem keramischem Material besteht, dessen einzelne Kristalle aus keramischem Material untereinander während eines Zeitraums von 15 min bis 10 h bei zumindest 1600°C fest zusammengesintert sind, um die Porosität zwischen den Kristallen zu minimalisieren.

2. Filter aus Keramik mit offenzelliger Schaumstruktur zum Filtrieren von Metallschmelzen, wobei die Keramik im wesentlichen phosphatfrei ist und die einzelnen Kristalle der Keramik untereinander dicht gesintert sind und kein Bindematerial zwischen den Kristallen vorhanden ist und die Filter derart hergestellt werden, dass ein offenzelliger organischer Polymerschaum mit einem wässerigen, thixotrope Eigenschaften aufweisenden Schlicker aus keramischen Werkstoffen imprägniert wird, dass der überschüssige Schlicker entfernt, der beschichtete Polymerschaum getrocknet und erhitzt wird, wobei der organische Polymerschaum zersetzt und verflüchtigt wird, dass der resultierende keramische Schaum bei erhöhter Temperatur gebrannt und dabei gesintert wird, wobei eine Keramik mit offenzelliger Schaumstruktur entsteht, dadurch gekennzeichnet, dass die Keramik aus einem Schlicker, enthaltend 2,4 bis 15 Gew.-% eines gelierten Aluminiumhydroxid-Binders, wobei die Menge des Binders sich auf die Menge des trockenen Materials der keramischen Zusammensetzung bezieht, hergestellt wird und der keramische Schaum bei mindestens 1093°C während mindestens 15 Minuten gesintert wird, so dass die Keramik mit offenzelliger Schaumstruktur aus keramischem Material mit fest gesinterter Bindung besteht.

3. Filter nach Anspruch 1, dadurch gekennzeichnet, dass die Keramik aus einem Schlicker, enthaltend 8-30 Gew.-%, vorzugsweise 10 bis 25 Gew.-%, wobei die Menge auf Aluminiumorthophosphat basiert, Phosphatbindemittel, hergestellt wird.

4. Filter nach Ansprüchen 1 oder 2, dadurch gekennzeichnet, dass die einzelnen Kristalle aus keramischem Material zusammengesintert sind und die Porosität zwischen den Körnchen so gering gehalten ist, dass eine Mikroporosität entsteht.

5. Filter nach Anspruch 4, dadurch gekennzeichnet, dass die Mikroporosität weniger als 5% beträgt.

6. Filter nach Anspruch 1, dadurch gekennzeichnet, dass als Phosphatbindemittel Aluminiumorthophosphat eingesetzt wird.

7. Filter nach Anspruch 2, dadurch gekennzeichnet, dass die Keramik aus einem Schlicker, enthaltend 3 bis 15 Gew.-% geliertes Böhmit, wobei die Menge des Binders sich auf die Menge des trockenen Materials der keramischen Zusammensetzung bezieht, hergestellt wird.

8. Filter nach Ansprüchen 1 bis 6, dadurch gekennzeichnet, dass als keramischer Werkstoff Tonerde oder Aluminiumoxid eingesetzt wird.

9. Verfahren zur Herstellung eines Filters nach Anspruch 1, indem ein offenzelliger organischer Polymerschaum mit einem wässerigen, thixotrope Eigenschaften aufweisenden Schlicker aus keramischen Werkstoffen imprägniert wird, dass der überschüssige Schlicker entfernt, der beschichtete Polymerschaum getrocknet und erhitzt wird, wobei der organische Polymerschaum zersetzt und verflüchtigt wird, dass der resultierende keramische Schaum bei erhöhter Temperatur gebrannt und dabei gesintert wird, wobei eine Keramik mit offenzelliger Schaumstruktur entsteht, dadurch gekennzeichnet, dass der Schlicker zumindest 8 Gew.-%, wobei die Menge auf Aluminiumorthophosphat basiert, Phosphatbindemittel enthält, wobei die Menge des Binders sich auf die Menge des trockenen Materials der keramischen Zusammensetzung bezieht, und beim Sintern eine Keramik mit offenzelliger Schaumstruktur aus weniger als 2 Gew.-% Phosphat -- ausgedrückt als $P_2O_5$ -- enthaltendem Material entsteht, deren einzelne Kristalle aus keramischem Material während eines Zeitraumes von 15 min bis 10 h bei zumindest 1660° C zusammengesintert werden, um die Porosität zwischen den Kristallen zu minimalisieren.

10. Verfahren zur Herstellung eines Filters nach Anspruch 2, indem ein offenzelliger organischer Polymerschaum mit einem wässerigen, thixotrope Eigenschaften aufweisenden Schlicker aus keramischen Werkstoffen imprägniert wird, dass der überschüssige Schlicker entfernt, der beschichtete Polymerschaum getrocknet und erhitzt wird, wobei der organische Polymerschaum zersetzt und verflüchtigt wird, dass der resultierende keramische Schaum bei erhöhter Temperatur gebrannt und dabei gesintert wird, wobei eine Keramik mit offenzelliger Schaumstruktur entsteht, dadurch gekennzeichnet, dass der Schlicker 2,4 bis 15 Gew.-%, zweckmäßig 3 bis 15 Gew.-%, eines gelierten Aluminiumhydroxid-Binders, wobei die Menge des Binders sich auf die Menge des trockenen Materials der keramischen Zusammensetzung bezieht, enthält und der keramische Schaum bei mindestens 1093° C während mindestens 15 Minuten gesintert wird, dass eine Keramik mit offenzelliger Schaumstruktur aus keramischem Material mit fest gesinterter Bindung entsteht.

11. Verfahren nach Anspruch 9, dadurch gekennzeichnet, dass die Brenntemperatur während eines Zeitraumes von 15 min bis 10 h zumindest 1676° C beträgt.

12. Verfahren nach Anspruch 9, dadurch gekennzeichnet, dass als Phosphatbindemittel Aluminiumorthophosphat eingesetzt wird.

13. Verfahren nach Anspruch 9, dadurch gekennzeichnet, dass 8 bis 30 Gew.-% , zweckmässig mindestens 10 Gew.-% und vorzugsweise 10 bis 30 Gew.-% Phosphatbindemittel, wobei die Menge auf Aluminiumorthophosphat basiert, eingesetzt werden.

14. Verfahren nach Anspruch 10, dadurch gekennzeichnet, dass die kollidale Dispersion des Aluminiumhydroxids mittels einer Säure, die unter Brenntemperaturen flüchtig ist, hergestellt wird und ein thixotroper Schlicker mit strukturviskosem Verhalten zusammen mit keramischem Material hergestellt wird.

15. Verfahren nach Anspruch 10, dadurch gekennzeichnet, dass als Aluminiumhydroxid Böhmit verwendet wird.

16. Verfahren nach Anspruch 14, dadurch gekennzeichnet, dass als Säure Salpetersäure angewendet wird.

17. Verfahren nach Anspruch 10, dadurch gekennzeichnet, dass die Brenntemperatur mindestens 1371° C während mindestens 15 Minuten beträgt.

18. Verfahren nach Anspruch 10, dadurch gekennzeichnet, dass die Brenntemperatur während 15 Minuten bis 10 h aufrechterhalten wird.

19. Verfahren nach Ansprüchen 9 oder 10, dadurch gekennzeichnet, dass als keramischer Werkstoff Tonerde oder Aluminiumoxid eingesetzt wird.

20. Verfahren nach Ansprüchen 9 oder 10, dadurch gekennzeichnet, dass als Polymerschaum ein Polyurethanschaum mit 2 bis 40 Poren je cm Länge angewendet wird.

21. Verwendung der Filter nach den Ansprüchen 1 oder 2, zum Filtrieren von Eisenmetall-, Eisenmetallegierungen und Stahlschmelzen.

## Claims

1. Ceramic filter with open-cell foam structure for filtering metal melts, wherein the ceramic is essentially phosphate-free and the individual crystals of the ceramic are sintered tightly to one another and there is no binder material between the crystals, and the filters are produced such that an open-cell organic polymer foam is impregnated with an aqueous slip of ceramic materials having thixotropic properties, that the excess slip is removed, the coated polymer foam is dried and heated, wherein the organic polymer foam decomposes and evaporates, that the resulting ceramic foam is combusted at elevated temperature and thus sintered, wherein a ceramic with open-cell foam structure is produced, characterised in that the ceramic is produced from a slip containing at least 8 wt.% of phosphate binder, the amount being based on aluminium orthophosphate, wherein the amount of binder is based on the amount of dry material in the ceramic composition, and the ceramic with open-cell foam structure consists of ceramic material containing less than 2 wt.% of phosphate, expressed as $P_2O_5$, the individual crystals of ceramic material of which are sintered together solidly for a period of 15 minutes to 10 hours at at least 1,600°C in order to minimise the porosity between the crystals.

2. Ceramic filter with open-cell foam structure for filtering metal melts, wherein the ceramic is essentially phosphate-free and the individual crystals of the ceramic are sintered tightly to one another and there is no binder material between the crystals, and the filters are produced such that an open-cell organic polymer foam is impregnated with an aqueous slip of ceramic materials having thixotropic properties, that the excess slip is removed, the coated polymer foam is dried and heated, wherein the organic polymer foam decomposes and evaporates, that the resulting ceramic foam is combusted at elevated temperature and thus sintered, wherein a ceramic with open-cell foam structure is produced, characterised in that the ceramic is produced from a slip containing 2.4 to 15 wt.% of a gelled aluminium hydroxide binder, wherein the amount of binder is based on the amount of dry material in the ceramic composition, and the ceramic foam is sintered at at least 1,093°C for at least 15 minutes, so that the ceramic with open-cell foam structure consists of ceramic material with solidly sintered bonding.

3. Filter according to claim 1, characterised in that the ceramic is produced from a slip containing 8-30 wt.%, preferably 10 to 25 wt.%, of phosphate binder, the amount being based on aluminium orthophosphate.

4. Filter according to claims 1 or 2, characterised in that the individual crystals of ceramic material are sintered together, and the porosity between the grains is kept so low that microporosity is produced.

5. Filter according to claim 4, characterised in that the microporosity is less than 5 %.

6. Filter according to claim 1, characterised in that aluminium orthophosphate is used as phosphate binder.

7. Filter according to claim 2, characterised in that the ceramic is produced from a slip containing 3 to 15 wt.% of gelled boehmite, wherein the amount of binder is based on the amount of dry material in the ceramic composition.

8. Filter according to claims 1 to 6, characterised in that alumina or aluminium oxide is used as ceramic material.

9. Process for producing a filter according to claim 1, in that an open-cell organic polymer foam is impregnated with an aqueous slip of ceramic materials having thixotropic properties, in that the excess slip is removed, the coated polymer foam is dried and heated, wherein the organic polymer foam decomposes and evaporates, in that the resulting ceramic foam is combusted at elevated temperature and thus sintered, wherein a ceramic with open-cell foam structure is produced, characterised in that the slip contains at least 8 wt.% of phosphate binder, the amount being based on aluminium orthophosphate, wherein the amount of binder is based on the amount of dry material in the ceramic composition, and on sintering a ceramic with open-cell foam structure is produced from material containing less than 2 wt.% of phosphate, expressed as $P_2O_5$, the individual crystals of ceramic materials of which are sintered together for a period of 15 minutes to 10 hours at at least 1,660°C in order to minimise the porosity between the crystals.

10. Process for producing a filter according to claim 2, in that an open-cell organic polymer foam is impregnated with an aqueous slip of ceramic materials having thixotropic properties, in that the excess slip is removed, the coated polymer foam is dried and heated, wherein the organic polymer foam decomposes and evaporates, in that the resulting ceramic foam is combusted at elevated temperature and thus sintered, wherein a ceramic with open-cell foam structure is produced, characterised in that the slip contains 2.4 to 15 wt.%, advantageously 3 to 15 wt.%, of a gelled aluminium hydroxide binder, wherein the amount of binder is based on the amount of dry material in the ceramic composition, and the ceramic foam is sintered at at least 1,093°C for at least 15 minutes, in that a ceramic with open-cell foam structure is produced from ceramic material with solidly sintered bonding.

11. Process according to claim 9, characterised in that the combustion temperature is at least 1,676°C for a period of 15 minutes to 10 hours.

12. Process according to claim 9, characterised in that aluminium orthophosphate is used as phosphate binder.

13. Process according to claim 9, characterised in that 8 to 30 wt.%, advantageously at least 10 wt.%, and preferably 10 to 30 wt.%, of phosphate binder are used, the amount being based on aluminium orthophosphate.

14. Process according to claim 10, characterised in that the colloidal dispersion of aluminium hydroxide is produced by means of an acid which is volatile below combustion temperatures, and a thixotropic slip showing structurally viscous behaviour is produced together with ceramic material.

15. Process according to claim 10, characterised in that boehmite is used as aluminium hydroxide.

16. Process according to claim 14, characterised in that nitric acid is used as acid.

17. Process according to claim 10, characterised in that the combustion temperature is at least 1,371°C for at least 15 minutes.

18. Process according to claim 10, characterised in that the combustion temperature is maintained for 15 minutes to 10 hours.

19. Process according to claims 9 or 10, characterised in that alumina or aluminium oxide is used as ceramic material.

20. Process according to claims 9 or 10, characterised in that a polyurethane foam having 2 to 40 pores for every cm of length is used as polymer foam.

21. Use of the filter according to claims 1 or 2 to filter iron metal, iron metal alloys and steel melts.

**Revendications**

1. Filtre en céramique à structure cellulaire à cellules ouvertes pour la filtration de métaux fondus, la céramique étant essentiellement exempte de phosphate et les différents cristaux de la céramique étant frittés entre eux de façon dense et aucun liant n'étant présent entre les cristaux et les filtres étant fabriqués de telle sorte qu'une mousse polymère organique à cellules ouvertes est imprégnée d'une barbotine aqueuse de matériaux céramiques, présentant des propriétés thixotropes, que la barbotine en excès est éliminée, que la mousse polymère enduite est séchée et chauffée, la mousse polymère organique se décomposant et se volatilisant, que la mousse céramique obtenue est cuite à une température élevée et ainsi frittée, une céramique à structure cellulaire à cellules ouvertes étant obtenue, caractérisé en ce que la céramique est fabriquée à partir d'une barbotine contenant au moins 8 % en poids de liant phosphate, la quantité se référant à de l'orthophosphate d'aluminium, la quantité de liant se rapportant à la quantité de matière sèche de la composition céramique et que la céramique à structure cellulaire à cellules ouvertes est en un matériau céramique contenant moins de 2 % en poids de phosphate, exprimé en $P_2O_5$, et dont les différents cristaux en matériau céramique sont solidement frittés entre eux pendant une durée de 15 min à 10 h à une température d'au moins 1600°C, pour réduire au minimum la porosité entre les cristaux.

2. Filtre en céramique à structure cellulaire à cellules ouvertes pour la filtration de métaux fondus, la céramique étant essentiellement exempte de phosphate et les différents cristaux de la céramique étant frittés entre eux de façon dense et aucun liant n'étant présent entre les cristaux et les filtres étant fabriqués de telle sorte qu'une mousse polymère organique à cellules ouvertes est imprégnée d'une barbotine aqueuse de matériaux céramiques, présentant des propriétés thixotropes, que la barbotine en excès est éliminée, que la mousse polymère enduite est séchée et chauffée, la mousse polymère organique étant décomposée et volatilisée, que la mousse céramique obtenue est cuite à une température élevée et ainsi frittée, une céramique à structure cellulaire à cellules ouvertes étant obtenue, caractérisé en ce que la céramique est fabriquée à partir d'une barbotine contenant de 2,4 à 15 % en poids d'un liant hydroxyde d'aluminium gélifié, la quantité de liant se rapportant à la quantité de matière sèche de la composition céramique et que la mousse céramique est frittée à une température d'au moins 1093°C et pendant au moins 15 min, de sorte que la céramique à structure cellulaire à cellules ouvertes est en un matériau céramique à liaison solidement frittée.

3. Filtre selon la revendication 1, caractérisé en ce que la céramique est fabriquée à partir d'une barbotine contenant de 8 à 30 % en poids, de préférence de 10 à 25 % en poids d'un liant phosphate, la quantité se référant à de l'orthophosphate d'aluminium.

4. Filtre selon les revendications 1 ou 2, caractérisé en ce que les différents cristaux en matériau céramique sont frittés entre eux et que la porosité entre les granules est réduite au minimum de façon à créer une microporosité.

5. Filtre selon la revendication 4, caractérisé en ce que la microporosité est inférieure à 5 %.

6. Filtre selon la revendication 1, caractérisé en ce qu'on utilise comme liant phosphate de l'orthophosphate d'aluminium.

7. Filtre selon la revendication 2, caractérisé en ce que la céramique est fabriquée à partir d'une barbotine contenant de 3 à 15 % en poids de böhmite gélifiée, la quantité de liant se rapportant à la quantité de matière sèche de la composition céramique.

8. Filtre selon les revendications 1 à 6, caractérisé en ce qu'on utilise comme matériau céramique de l'alumine ou de l'oxyde d'aluminium.

9. Procédé de fabrication d'un filtre selon la revendication 1, dans lequel une mousse polymère organique à cellules ouvertes est imprégnée d'une barbotine aqueuse de matériaux céramiques, présentant des propriétés thixotropes, la barbotine en excès est éliminée, la mousse polymère enduite est séchée et chauffée, la mousse polymère organique étant décomposée et volatilisée, la mousse céramique obtenue est cuite à une température élevée et ainsi frittée, une céramique à structure cellulaire à cellules ouvertes étant obtenue, caractérisé en ce que la barbotine contient au moins 8 % en poids de liant phosphate, la quantité se référant à de l'orthophosphate d'aluminium, la quantité de liant se rapportant à la quantité de matière sèche de la composition céramique, et qu'on obtient au cours du frittage une céramique à structure cellulaire à cellules ouvertes en un matériau contenant moins de 2 % en poids de phosphate, exprimé en $P_2O_5$, dont les différents cristaux en matériau céramique sont frittés entre eux pendant une durée de 15 min à 10 h à une température d'au moins 1660°C, pour réduire au minimum la porosité entre les cristaux.

10. Procédé de fabrication d'un filtre selon la revendication 2, dans lequel une mousse polymère organique à cellules ouvertes est imprégnée d'une barbotine aqueuse de matériaux céramiques, présentant des propriétés thixotropes, la barbotine en excès est éliminée, la mousse polymère enduite est séchée et chauffée, la mousse polymère organique étant décomposée et volatilisée, la mousse céramique obtenue est cuite à une température élevée et ainsi frittée, une céramique à structure cellulaire à cellules ouvertes étant obtenue, caractérisé en ce que la barbotine contient de 2,4 à 15 % en poids, de façon appropriée de 3 à 15 % en poids d'un liant hydroxyde d'aluminium gélifié, la quantité de liant se référant à la quantité de matière sèche de la composition céramique, et que la mousse céramique est frittée à une température d'au moins 1093°C pendant au moins 15 min, et qu'on obtient une céramique à structure cellulaire à cellules ouvertes en matériau céramique à liaison solidement frittée.

11. Procédé selon la revendication 9, caractérisé en ce que la température de cuisson atteint au moins 1676°C pendant une durée de 15 min à 10 h.

**12.** Procédé selon la revendication 9, caractérisé en ce qu'on utilise comme liant phosphate de l'orthophosphate d'aluminium.

**13.** Procédé selon la revendication 9, caractérisé en ce qu'on utilise de 8 à 30 % en poids, de façon appropriée au moins 10 % en poids et de préférence de 10 à 30 % en poids de liant phosphate, la quantité se référant à l'orthophosphate d'aluminium.

**14.** Procédé selon la revendication 10, caractérisé en ce que la dispersion colloïdale d'hydroxyde d'aluminium est préparée à l'aide d'un acide volatil à des températures inférieures aux températures de cuisson et qu'une barbotine thixotrope à comportement visqueux est préparée avec le matériau céramique.

**15.** Procédé selon la revendication 10, caractérisé en ce qu'on utilise comme hydroxyde d'aluminium de la böhmite.

**16.** Procédé selon la revendication 14, caractérisé en ce qu'on utilise comme acide de l'acide nitrique.

**17.** Procédé selon la revendication 10, caractérisé en ce que la température de cuisson atteint au moins 1371° C pendant un minimum de 15 min.

**18.** Procédé selon la revendication 10, caractérisé en ce qua la température de cuisson est maintenue pendant 15 min à 10 h.

**19.** Procédé selon les revendications 9 ou 10, caractérisé en ce qu'on utilise comme matériau céramique de l'alumine ou de l'oxyde d'aluminium.

**20.** Procédé selon les revendications 9 ou 10, caractérisé en ce qu'on utilise comme mousse polymère une mousse en polyuréthanne présentant de 2 à 40 pores par cm de longueur.

**21.** Emploi des filtres selon les revendications 1 ou 2, pour filtrer des métaux ferreux fondus, des alliages de métaux ferreux fondus et des aciers fondus.